# EUROPEAN PATENT SPECIFICATION

(11) **EP 2 337 281 B1**
(45) Date of publication and mention of the grant of the patent: **26.09.2012**
(21) Application number: 09306267.7
(22) Date of filing: 18.12.2009
(51) Int. Cl.: H04L 12/56

(54) **Method of exchanging routing information between network nodes in a packet switched network**
Verfahren zum Austausch von Leitweglenkungsinformationen zwischen Netzwerkknoten in einem paketvermittelten Netzwerk
Procédé d'échange d'information d'acheminement entre noeuds de réseau dans un réseau commuté par paquets

(43) Date of publication of application: 22.06.2011
(73) Proprietor: Alcatel Lucent, 75007 Paris (FR)
(72) Inventor: Puricelli, Paolo Maria, 20040, Caponago (IT); Ciammarughi, Laura, 20040, Caponago (IT)
(74) Representative: Urlichs, Stefan

(56) References cited:
- US-A1- 2007 263 532
- US-A1- 2009 086 726
- US-B1- 7 099 286

## Description

### Field of the invention

The invention relates to a method of exchanging routing information in a packet switched network.

### Background

In packet switched networks, data packets are exchanged between network nodes according to network protocols, such as the Connectionless Network Protocol (CLNP) as specified in the paper "Information technology , Protocol for providing the connectionless-mode network service: Protocol specification ISO/IEC 8473-1; 1998", briefly called ISO 8473. A data packet, which is received by a network node, is forwarded by the network node to a further network node depending on the destination network address of the data packet and depending on the routing table stored within the network node. Such a routing-table is generated by the network node via an algorithm called Shortest Path First based on the routing information received from other network nodes via so called link state messages. The distribution of routing information via link state messages according to the routing protocol called Intermediate System - Intermediate System (IS-IS) is defined in the paper "ISO/IEC, FDIS 10589: 2001 (E), Information technology -Telecommunications and information exchange between systems - Intermediate System to Intermediate System intra-domain routing information exchange protocol for use in conjunction with the protocol for providing the connectionless-mode network service (ISO 8473)", briefly called ISO 10589.

A network node advertises itself to other network nodes of the network by distributing link state messages to the other network nodes, wherein such link state-messages are called link state-packet protocol data unit (LSP PDU), Within such a link state message, the network node is making public its own node address, a list of network nodes which are adjacent to the network node, and for each of the adjacent network nodes a respective metric. The respective metric is associated with a respective link that connects the network node with the respective adjacent network node.

According to the standard ISO 10589, there are six bits available within a LSP PDU message, for setting the value of a so called Default metric of a link. Further types of metrics are possible, such as the Delay metric, measuring the transit delay on the link, but in practice, only the Default metric is commonly used.

The limitation of six bits for assigning a value to a Default metric limits the maximum value for metric to the value of 63, since six bits allow only a value range of 0-63.

A network node determining via the Shortest Path First algorithm a path for forwarding a data packet to a destination network node will choose that path, which has the smallest overall metric as the sum of the metrics of the links forming the path.

According to the proposal "Network Working Group, Request for Comments: 5305, IS-IS Extensions for Traffic Engineering, October 2008", briefly called RFC5305, values higher than 63 may be assigned to a metric of a link. For this purpose, the proposal RFC 5303 proposes an extended data structure called Type Length Value that has to be contained in the LSP PDU. Such a data structure allows using up to 24 bits for defining the metric value, allowing a value range for the Default metric ranging from 0 to 1023. In order to use such an extended value range for assigning a value to a metric, all network nodes of the network have to comply with the standard RFC 5305.

The document US 2007/0263532 A1 discloses a method for switching from a backup path to a working path in a Synchronous Optical Network . Routers pre-establish in their link state data bases the links for both working and backup paths. In case of a failure of a link of a working path, the method provides a rapid switchover of optical links so as to substitute one or more links in the corresponding backup path. This is accomplished by changing the relative costs of links involved in the working and the backup path, so that the routers select the backup links for their routing tables.

### Summary

According to the invention, a method of exchanging routing information between network nodes in a packet switched network is proposed.

The network nodes of the network advertise themselves to other network nodes by sending to the other network nodes link state messages that contain:
- a network node address of the respective node,
- an adjacency list that indicates network nodes which are adjacent to the respective node, and
- for each adjacent network node that is indicated in the adjacency list, a metric that is associated with a respective link connecting the respective network node and the respective adjacent network node.

On of the network nodes contains a first interface and a second interface. Via the first interface, the network node is able to reach via a preferred path another network node, Via the second interface, the network node is able to reach via a backup path the same other network node. The network node increases an overall metric of the backup path, by advertising to the other network nodes of the network a pseudo network node as a network node located between the network node itself and the other network node.

By creating the pseudo network node as an additional network node along the backup path, it is automatically created an additional link between the node and the pseudo network node. This additional link has an additional metric that increases the overall metric of the backup path. Therefore, the proposed method is a method that allows increasing the overall metric of the backup path without having to increase the metric of an already existing link with the help of additional bits using extended data structures. Therefore, the proposed method is a solution, which can be carried out by a single network node for increasing the overall metric of a backup path. This method can be carried out at the network node itself, while the other network nodes of the network support have to support neither this proposed method by nor the method proposed according to the standard RFC 5303.

### Brief description of the drawings

Figure 1 shows a network with network nodes.
Figure 2 shows the network and a pseudo node.
Figure 3 shows a network node.
Figure 4 shows different protocols of different protocol layers according to a first embodiment.
Figure 5 shows different protocols of different protocols layers according to a second embodiment.

### Description of embodiments

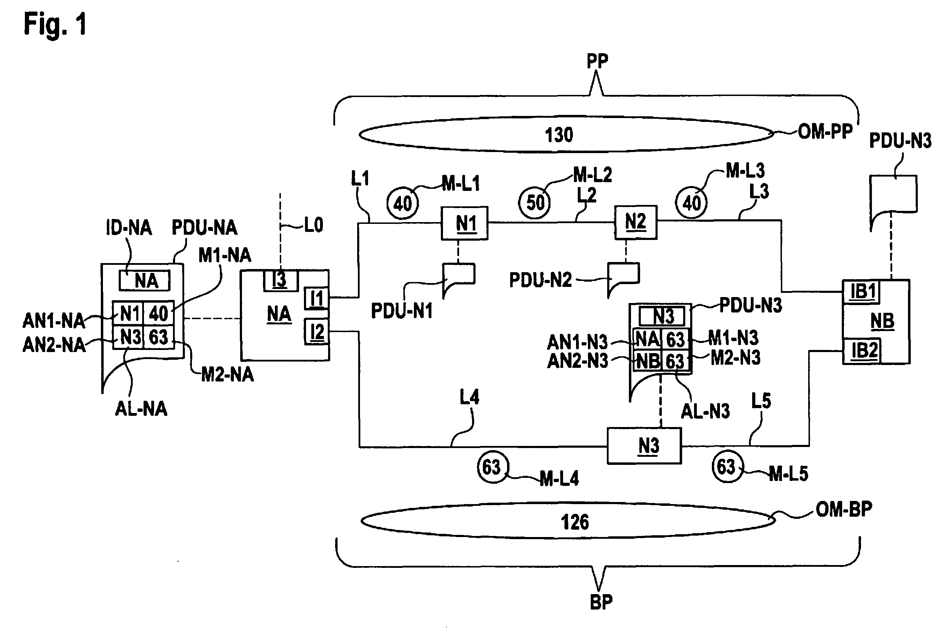

Figure 1 shows two network nodes NA, NB which are connected via a preferred path PP and via a backup path BP. The preferred path PP leads from the interface I1 of the node NA along the link L1 to the node N1. From the node N1, the preferred path PP proceeds via the link L2 to the node N2, from where on the preferred path proceeds via the link L3 to the interface IB1 of the node NB. The backup path BP leads from the interface 12 of the node NA via the link L4 to the node N3. From there, the backup patch BP proceeds via the link L5 to the interface IB2 of the node NB.

The link L1 has a metric M-L1 of the value 40. The link L2 has a metric M-L2 of the value 50. The link L3 has a metric M-L3 of the value 40. Thus, the overall melric OM-PP of the preferred path PP is given as the sum of the metrics of the links L1, L2, L3, adding up to a value of 130.

The link L4 has a metric M-L4 of the value 63. The link L5 has a metric M-L5 of a value 63. This leads to an overall metric OM-BP of the backup path SP as the value 126.

The node NA advertises itself to other network nodes of the network, by sending a link state message PDU-NA, which contains the node address ID-NA of the node NA and on adjacency list of node NA. The adjacency list AL-NA indicates as a first adjacent node AN1-NA the node N1, Furthermore, the adjacency list AL-NA indicates as another adjacent node AN2-NA the node N3. For each adjacent network node contained in the adjacency list AL-NA, a metric M1 -NA, M2-NA that it associated with the respective link L1, L4 is contained. For the link L1 leading to the node N1, the adjacency list AL-NA contains a metric M1 -NA that has the value 40, since this is the metric M-L1 of the link L1. Furthermore, the adjacency AL-NA contains a metric L2-NA, which has the value 63, since this is the value of the metric M-L4 of the link L4.

The node N3 advertises itself to other network nodes by sending a link state message PDU-N3. This message PDU-N3 contains the node address ID-N3 of the node N3. Furthermore, the message PDU-N3 contains an adjacency list AL-N3, which indicates the adjacent nodes of the node N3, as well as metrics of the links leading to the adjacent nodes indicated in the adjacency list AL-N3. The adjacency list AL-N3 indicates a first adjacent node AN1-N3, which is the node NA. Furthermore, the adjacency list AL-N3 indicates another adjacent node AN2-N3, which is the node NB. A metric M1-N3 has the value 63, which is the value of the metric M-L4 of the link L4, connecting the node N3 and the node NA as the adjacent node AN1-M3. A further metric M2-N3 has the value 63, which is the value of the metric M-L5 of the link L5, connecting the node N3 with the node NB as the adjacent node AN2-N3,

The network nodes N1, N2, NB advertise themselves by sending link state messages PDU-NI, PDU-N2, PDU-NB, which contain appropriate information for advertising themselves, a list of their adjacent nodes and metrics of links leading to the adjacent nodes. The messages PDU-NI, PDU-N2, PDU-NB contain information which is constructed analogue to the information contained in the link state messages PDU-NA, PDU-N3.

The node NA is connected via an interface I3 along a link L0 to other nodes of the network. Such other nodes, receiving link state messages from the nodes NA, N1, N2, N3, NB build their routing-tables depending on the metrics of links contained in the link state messages PDU-NA, ... , PDU-NB. An SPF algorithm generates a routing-table for forwarding a data packet, such that the data packet will be routed via the path having the smallest overall metric. Thus, the resulting routing tables will cause a routing for a data packet, which is to be sent via the node NA to the node NB, such that the data packet will be forwarded from the node NA via the backup path. This is due to the fact that the overall metric OM-BP of the backup path BP is smaller than the overall metric OM-PP of the preferred path PP,

It shall be ensured, that data packets having their destination address as the address of the node NB, shall be forwarded via the node NA along the preferred path PP instead of the backup path BP, In order to achieve this, the overall metric OM-BP of the backup path BP has to be increased, such that it is larger than the overall metric OM-PP of the preferred path PP,

It shall be furthermore assumed, that for assigning a va lue to a metric only six bits are available, leading to a maximum value for a metric of 63. Since the backup path BP comprises only two links L4, L5, and since both links both already have been assigned their maximum value 63, the overall metric OM-BP of the backup path BP already has reached its maximum value of 126. Therefore, it is not possible to increase a metric M-L4, M-L5 of a link L4, L5 of the backup path BP, in order to increase the overall metric OM-BP of the backup path to a value higher than that the overall metric OM-PP of the preferred path PP, being at 130. Therefore, when using only six bits for assigning a value to a metric, it is not possible to ensure, that data packets arriving at the node NA will be forwarded to the node NB along the preferred path PP instead of the backup path BP.

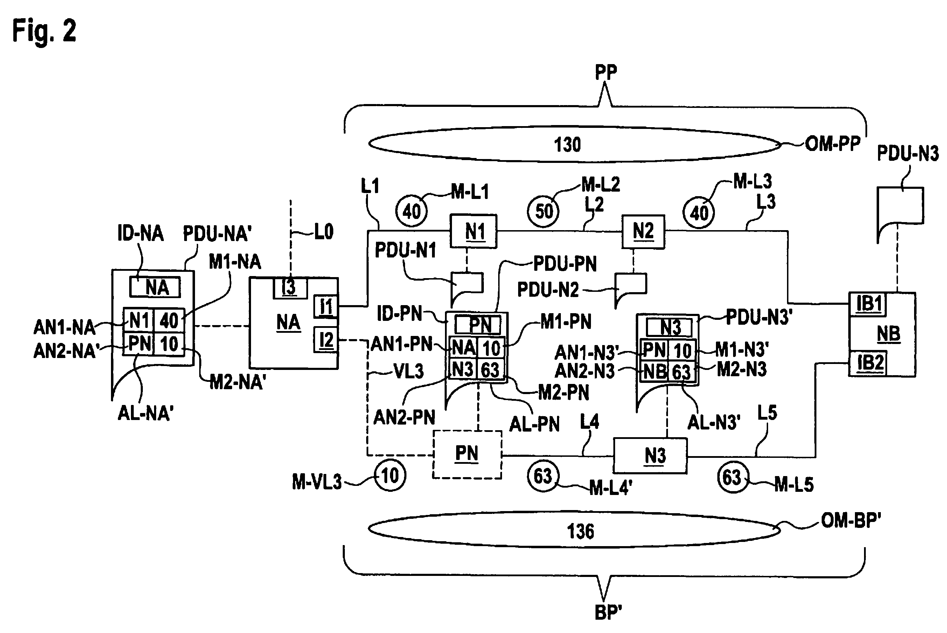

Figure 2 shows network nodes of the network, according to an embodiment, in which it is possible to increase the overall metric of the backup path without having to use more than six bits for assigning a value to a metric.

Figure 2 shows all network nodes as shown in Figure 1. Furthermore, Figure 2 shows all links as shown in Figure 1, except for the link L4 and a new link VL3. According to Figure 2, the link L4 connects the node N3 with the pseudo node PN, and the link VL3 connects the pseudo node PN with the interface I2 of the node NA. The pseudo node PN is a pseudo node that is created by the node NA, which results in an additional virtual link VL3 connecting the node NA and the node PN. The new backup path BP' now leads from the node NA to the node NB along the virtual link VL3 to the node PN, from there via the link L4 to the node N3 and furthermore via the link L5 to the node NB. The virtual link VL3 is assigned a metric M-VL3 of the value 10. All other links L1, L2, L3, L4, L5 are assigned the same metrics as previously shown in Figure 1.

The creation of the pseudo node PN, which is carried out by the node NA, results in an additional link VL3, which leads to an increased overall metric OM-BP' of the backup path BP'. Now, the backup path BP' has an overall metric OM-BP' with a value of 136, which is greater that the value of the overall metric OM-PP 130 of the preferred path PP. Thus, by creating the pseudo node PN, the node NA achieves that the overall metric OM-BP' is larger than the overall metric OM-PP, which results in the preferred path PP to be chosen os that path, along which data packets will be forwarded from the node NA to the node NB.

The node BOA advertises the pseudo network node PN, in that it sends to other network nodes of the network link state messages PDU-PN, which contain:
- a pseudo node address JD-PN of the pseudo node PN,
- an adjacency list AL-PN, that contains as an adjacent node AN1-PN the node NA and as another adjacent node AN2-PN the node N3,
- a metric M1 -PN that is the metric of the link VL3 connecting the pseudo node PN and the node NA, and
- a metric N2-PN that is the metric of the link L4 connecting the pseudo node and the node N3.

The node NA creates the pseudo node PN as a node that is placed between the node NA itself and that node N3, which is the neighboring node to the node NA. The node N3 is reachable from the node NA via the interface 12 along the link L4, at which the pseudo PN is created.
Since the placement of the pseudo node as a node between NA and the node N3 causes a removal of the node N3 from the set of adjacent nodes of the node NA and an addition of the pseudo node PN to the set of adjacent nodes of the node NA, the node NA now advertises itself by distributing a modified link state message PDU-NA'. The message PDU-NA' contains in general the same data as the message PDU-NA shown in Figure 1, but a modified adjacency list AL-NA', which now contains as an adjacent node AN2-NA' the pseudo node PN instead of the previous adjacent node AN2-NA, which was the node N3. Furthermore, the previously contained metric M2-NA as the metric M-L4 of the link L4 previously connecting the node NA and the node N3, is now replaced by the metric M2-NA' as the metric M-VL3 of the link now connecting the node NA and the pseudo node PN,

The creation of the pseudo node PN, as a node located between the node N3 and NA, also causes a removal of the node NA from the set of adjacent nodes of the node N3, and an addition of the pseudo node PN to the set of adjacent nodes of the node N3. Therefore, also the network node N3 now considers the pseudo network node PN as an adjacent node instead of the node NA.

The node N3 discovers the pseudo node PN as its adjacent node by exchanging handshake messages with the node NA as described in the previously filed, but yet unpublished European Patent Application of the applicant with the application number 09306252.9. Formerly known handshake messages support only the discovery of adjacent network nodes via the first six bytes of their network node addresses. The handshake messages proposed in the patent application number 09306252.9 support the discovery of adjacent network nodes having a node address of six bytes plus a seventh byte, which is the Pseudo Node Identifier of a pseudo node. The proposed handshake messages contain a node address of that node, which sent the handshake- and a data field, which contains a Pseudo Node Identifier of a pseudo node that is associated with the node that sent the message. Furthermore, the proposed handshake messages contain a node address of a network node, which is discovered by the sending node as an adjacent node. Even furthermore, the proposed handshake messages contain a data field, which contains a Pseudo Node Identifier of a pseudo node that is associated with the adjacent node,

The node N3 advertises itself by sending a modified link state message PDU-N3', which contains in general the same data as the previously described link state message PDU-N3 shown in Figure 1, bus in which on adjacent node and a is modified, The previously adjacent node AN1-N3 of the message PDU-N3, which was the node NA, is replaced by the adjacent node AN1-N3', which is the pseudo node PN. The previously contained metric M1-N3 as the metric M-L4 of the link L4 connecting the node N3 and the node NA, is replaced by the metric M1-N3' as the metric M-L4' of the link L4. According to the example shown in Figure 2, the value of the metric M-L4' is the same value 63 as the value of the metric M-L4 shown in Figure 1.

According to the previously described solution, the node N3 updates the data in its link state message PDU-N3' due to handshake-messages, which are exchanged between the node N3 and the node NA. As an alternative solution, the node N3 updates the data of its link state message PDU-N3' due to a configuration that is performed at the node N3, which is carried out by the network manager.

The node NA chooses the node address of the pseudo node PN as described now in detail. According to the standard ISO 10589, a link state message contains the node address of a network node sending the message in the form of a link state package identifier (LSP ID). The link state package identifier consists of the so called Source IDentifier (Source ID), having a length called ID length, which is length of six bytes. The LSP ID consists furthermore of two further bytes, which are the bytes called Pseudo Node Identifier (Pseudo Node ID) and the byte called link state packet number (LSP Number).

For the node NA, which is a real node placed in the network, the Source ID is the node address of the node NA. The following byte, which is the Pseudo Node ID, is set so zero, which is mandatory for real network nodes. For pseudo nodes, such as the pseudo node PN, the Pseudo Node ID is set to a value different to zero. The byte LSP Number is not of importance for identifying a node via its node address, since an SPF algorithm operates only on the Source ID together with the Pseudo Node ID as the node address. The LSP number is not taken into consideration by the SPF algorithm.

The node NA sets the pseudo node address ID-PN of the pseudo node PN, by setting the Source ID of the pseudo node PN to the same value as the Source ID of the node NA itself. Furthermore, the node NA sets the Pseudo Node ID of the pseudo node address ID-PN to a value different to zero. An SPF algorithm of a node receiving a link state message PDU-PN, containing the pseudo node address ID-PN as a node address, will then identify the pseudo node PN as just another node within the network. Since the Pseudo Node ID has a length of one byte, it is possible to choose up to 255 different values for identifying 255 different pseudo nodes that can be created by the node NA.

The proposed method is a method, which allows the node NA to increase the overall metric OM-BP' of a path BP' in order to ensure that data packets are not forwarded via the backup path BP' but via the preferred path PP instead. The node NA achieves this, by simply creating and advertising a pseudo node PN, which is placed at the backup path BP'. The proposed method has to be implemented only at the node NA, while other network nodes N1, N2, N3, NB of the network do not need to support the proposed method. Therefore the proposed method carried out a the node NA is a method that is backward compatible to the conventional IS-IS routing-protocol according to the standard ISO 10589, which is running at the other network nodes N1, N2, N3, NB.

Furthermore, the proposed method is a solution, which allows to increase the overall metric OM-BP' of the backup path BP' even in the case that all links L4, L5 of the backup path BP have already reached their maximum values in their metrics M-L4, M-L5, and that the overall metric OM-PP of the preferred path is greater that the overall metric OM-BP of the backup path. By simply creating the pseudo node PN, the node NA provides a solution, which allows to increase the overall metric OM-BP- without having to use additional bits for assigning a value to a metric, as proposed by the standard RFC 5305. Thus, the proposed solution achieves the increase of the backup path's overall metric OM-BP', without having to implement the proposed standard RFC 5305 at the network nodes of the network.

The proposed solution given in Figure 2 is a solution, in which two network nodes both assign to a metric of a link both the same value. Thus, a link has the same metric regarding both possible transmission directions of the link. It is to be understood, that two network nodes that are connected via one link may assign different values to the metric of the same link, leading to different metric values of the link for different transmission directions, and thus leading to different metric values contained in their link state messages.

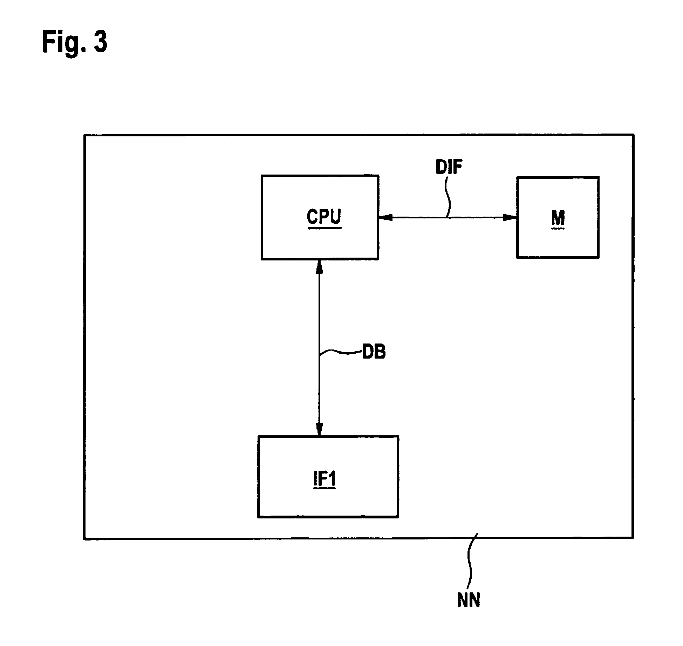

Figure 3 shows the hardware structure of the network node NN. The network node NN contains control means in the form of a processor CPU and a memory M. The processor and the memory M are connected via a data interface DIF. The network node contains an interface l1 and another interface 12,which are connected to the processor CPU via a data bus DB.

The number of processors contained in the network node NN is not limited to one processor, there may be multiple processors working in parallel and performing different types of protocols within the network node NN. Furthermore, more than one memory M may be contained in the network node NN. Further still, the number of interfaces via which the network node NN is connected to further network nodes is not limited to two, but may be larger. Via the interface I1 the network node NN exchanges data packets with another network node via preferred path. Via the interface I2 the network node NN exchanges data packets with the other network nodes via a backup path.

The control means of the network node are adapted to increase an overall metric of the backup path, by generating and sending link state messages for advertising the pseudo network node as a network node that is located between the network node NN itself and such a network node, which is directly reachable via the interface I2 along a single link. Such link state messages are link state messages as known from the IS-IS protocol. The different functions which are necessary for generating and sending such link state messages will now be described in detail.

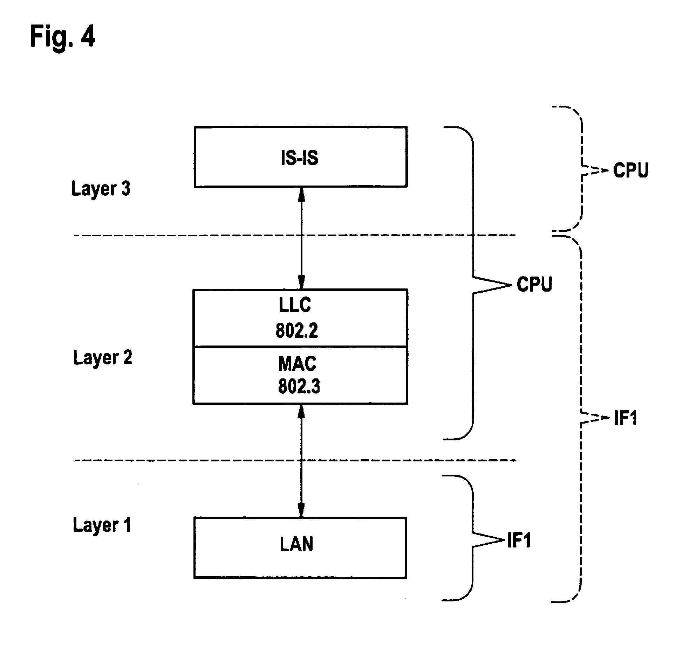

Figure 4 shows different protocols of different protocol layers carried out within the network node NN according to a first embodiment. At the Layer 3, also called the Network Protocol Layer, the IS-IS protocol is carried out. This Layer 3 protocol interacts with Layer 2 protocols, which are also called protocols of the Data Link Layer. The highest sublayer of the Data Link Layer is the Logical Link Control protocol according to the standard "IEEE Std 802.2-1998, Information processing systems - Local area networks - Part 2: logical link control, 31 Dec 1989, E-ISBN: 0-7381-4601-3", briefly called LLC. This protocol LLC directly interacts with the protocols of the Network Protocol Layer. Directly below the protocol LLC is placed the sub-layer of Media Access Control according to the standard "EEE Std 802.3-2008, IEEE Standard for Information technology~~Telecommunications and information exchange between systems~~Local and metropolitan area networks--Specific requirements Part 3: Carrier Sense Multiple Access with Collision Detection (CSMA/CD) Access Method and Physical Layer Specifications - Section Five, 2008, ISBN: 973-07381-5797-9", briefly called AC. This lower sub-layer of the Data Link Layer interacts with the protocol of the Layer 1, which also called the Physical Layer. At this Physical Layer, a protocol according to the Local Area Network LAN is running, which may me protocol according to the well known protocol 10 Base- T. The protocols of the Layer 2, which are the LLC protocol and the MAC protocol, together with the LAN protocol of the Layer 1 are well known as the technology called Ethernet.

Figure 4 furthermore illustrates, indicated by the solid line brackets, which types of protocol are carried out at which hardware within the network node NN. The processor CPU is adapted to run protocol of the Layer 3 and the Layer 2. Via the data bus DB, the processor CPU exchanges signals with the interfaces I1, I2. The interfaces I1, I2 are adapted to run the protocols of the Physical Layer.

The IS-IS protocol depicted in Figure 4 running on the processor CPU does not have to run as one single software, but may be run on the processor CPU as different processing threads. Furthermore, the different protocols of the Layer 3 and the Layer 2 may be run as different processing threads at different processors, which are then connected via the data bus DB.

The memory M is used by the processor CPU for storing information contained in link state messages received from other network nodes. The memory M does not necessarily hove to be one single memory, but may be made up of different memory elements or memory storage devices to which the processor CPU is connected via a data interface DIF.

According to this embodiment, indicated by the solid line brackets, the processor CPU is adapted to run protocols of the Layer 3 and the Layer 2. The interfaces I1, I2 are adapted to run protocols of the Layer 1.

According to an alternative solution, also indicated in Figure 4, the dashed line brackets indicates that the processor CPU is adapted to run protocols of the Layer 3, while the interfaces I1, I2 are adapted to run protocols of the Layer 2 and the Layer 1. The implementation of protocol within the interface I1 may be given as hardware or as software running on processors comprised within the hardware of the interfaces I1, I2.

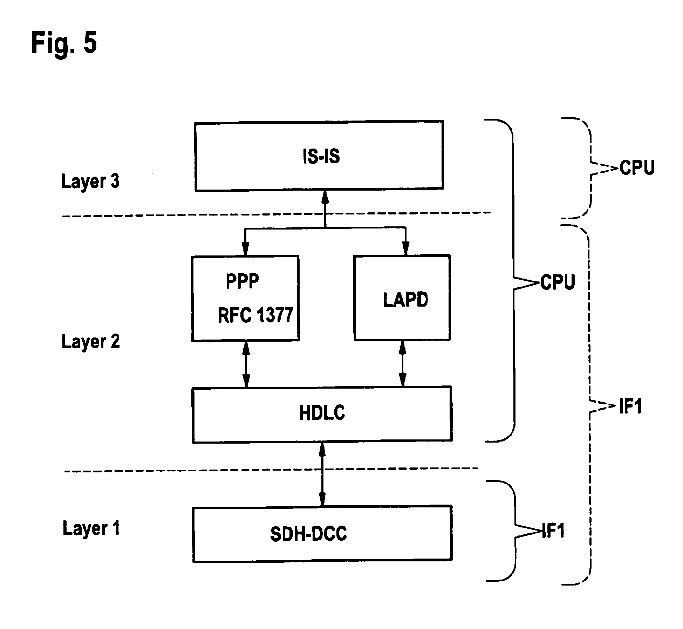

A second embodiment of different protocols of different protocol layers being carried out by different hardware components of the network node NN is shown in Figure 5.

At the Layer 3, the routing-protocol IS-IS is carried out.

At the Layer 2, different protocols are carried out for different types of messages received from the Layer 3. Messages originating from the IS-IS protocol are passed on to either the Link Access Procedure for D-Chonnel LAPD as defined in the paper "ITU-T Recommendation Q.921 (09/97), Digital Subscriber Signaling System No. 1- Data Link Layer", briefly called Q.921, or to the Point-to-Point protocol PPP as defined in the paper "Network Working Group, RFC 1377 - The PPP OSI Network Layer Control Protocol (OSINLCP), November 1992", briefly called RFC 1377. From either of these two protocols at the Layer 2, the resulting data is passed on to the next lower sub-layer of the Layer 2, which carries out framing of the data according to the protocol of High Level Data Link Control HDLC. The HDLC protocol passes the data on to the next lower layer, which is the Layer 1, where the data is then transmitted via the Data Communication Channel DCC of the SDH network to other network nodes.

As indicated in Figure 5 by the solid line brackets, the processor CPU is adapted to run the protocols of the Layer 3 and the Layer 2. Furthermore, the interfaces I1, I2 are adapted to run the protocols of the Layer 1.

According to an alternatives solution, also indicated in Figure 5 by the dashed link brackets, the processor CPU is adapted to carry out the protocols at the Layer 3 while the interfaces I1, I2 are adapted to carry out the protocols of the Layer 2 and Layer 1, The implementation of protocols within the interfaces I1 I2 may be given as hardware or as software running on processors comprised within the hardware of the interfaces I1, I2.

## Claims

1. Method of exchanging routing information between network nodes in a packet switched network,
wherein said network nodes (NA, NB, NX) advertise themselves to other network nodes (NA, NB, NX), by sending to said other network nodes (NA, NB, NX) link state messages (PDU-NA, PDU-NB, PDU-NX) containing
- a network node address (ID-NA) of the respective node (NA),
- an adjacency list (AL-NA) indicating network nodes (NX, NB) adjacent to said respective network node (NA), and
- for each adjacent network node (NX, NB) indicated in said adjacency list (AL-NA) a metric (M1-NA) associated with a respective link (L1) connecting said respective network node (NA) and said respective adjacent network node (NX),
wherein a first network node (NA) has
- a first interface (I1), via which a second network node (NB) is reachable via a preferred path (PP),
- and a second interface (I2), via which said second network node (NB) is reachable via a backup path (BP),
**characterized in that** said first network node (NA) increases an overall metric (OM1-BP) of said backup path (BP), by advertising to said other network nodes (NB, NX) at least one pseudo network node (PN) as a network node located between said first network node (NA) and said second network node (NB).

2. Method according to claim 1,
wherein said first network node (NA) advertises said pseudo network node (PN), by sending to said other network nodes (NB, NX) at least one link state message (PDU-PN) containing
- a pseudo network node address (ID-PN) as network node address,
- an adjacency list (AL-PN) indicating said first network node (NA) and a third network node (NB) which is reachable via said second interface (12) and,
- a metric (M1-PN) associated with a link (L3') connecting said pseudo network node (PN) and said third network node (NB).

3. Method according to claim 2,
wherein said link state message (PDU-PN) advertising said pseudo network node (PN) contains a second metric (M2-PN) associated with a second link (VL3) connecting said pseudo network node (PN) and said first network node (NA).

4. Method according to claim 3,
wherein said first network node (NA) advertises itself to said other network nodes (NB, NX), by sending to said other network nodes (NB, NX) at least one link state message (PDU-NA') containing
- an adjacency list (AL_NA') indicating said pseudo network node (PN) instead of said third node (NB), and
- a third metric (M2-NA') associated with said second link (VL3) connecting said first network node (NA) and said pseudo network node (PN).

5. Method according to claim 1 to 4,
wherein said first network node (NA) sets said pseudo network node address, by setting k first bytes of said pseudo network node address to k first bytes of said network node address (ID-NA) of said first network node (NA), and by setting i last bytes of said pseudo network node address to a value different to zero.

6. Method according to claim 1 to 5,
wherein said first network node (NA) exchanges with said third node (NB) handshake messages, wherein said handshake messages contain a respective pseudo network node identifier indicating a respective pseudo network node associated with the respective network node sending the handshake message.

7. Method according to claim 1 to 6,
wherein said network nodes generate from received link state messages routing tables for forwarding data packets.

8. Network node (NN) for exchanging data packets in a packet switched network,
wherein said network node (NN) is adapted to advertise itself to other network nodes, by generating and sending to said other network nodes at least one link state message containing
- a network node address of said network node,
- an adjacency list indicating network nodes adjacent to said network node,and
- for each adjacent network node indicated in said adjacency list, a metric of a respective link between said network node and said respective adjacent node,
wherein said network node comprises
- a first interface (IF1), which is adapted to exchange data packets with a second network node via a preferred path, and
- a second interface (IF2), which is adapted to exchange data packets with said second node via a backup path,
**characterized in that** said network node (NN) contains control means that are adapted to increase an overall metric of said backup path, by advertising to said other nodes at least one pseudo network node,
and wherein said control means are adapted to advertise said pseudo network node as a network node located between said first network node (NA) and said second network node (NB).

9. Network node according to claim 8,
wherein said network node is adapted to generate and send to said other nodes at least one link state message containing
- a pseudo network node address as network node address,
- an adjacency list indicating said network node and another network node which is reachable via said second interface (IF2),
- a metric associated with a link between said pseudo network node and said network node (NN).

## Patentansprüche

1. Verfahren zum Austauschen von Routing-Informationen zwischen Netzwerkknoten in einem paketvermittelten Netzwerk,
wobei sich die besagten Netzwerkknoten (NA, NB, NX) bei anderen Netzwerkknoten (NA, NB, NX) anzeigen, indem sie Verbindungsstatusnachrichten (PDU-NA, PDU-NB, PDU-NX) an die besagten anderen Netzwerkknoten (NA, NB, NX) senden, welche enthalten:
- Eine Netzwerkknotenadresse (ID-NA) des entsprechenden Knotens (NA),
- eine Nachbarschaftsliste (AL-NA), welche mit dem besagten entsprechenden Netzwerkknoten (NA) benachbarte Netzwerkknoten (NX, NB) angibt, und
- für jeden in der besagten Nachbarschaftsliste (AL-NA) angegebenen benachbarten Netzwerkknoten (NX, NB), eine mit einer entsprechenden Verbindungsstrecke (L1), welche den besagten entsprechenden Netzwerkknoten (NA) und den besagten entsprechenden benachbarten Netzwerkknoten (NX) verbindet, assoziierte Metrik (M1-NA),
wobei ein erster Netzwerkknoten (NA) aufweist:
- eine erste Schnittstelle (I1), über welche ein zweiter Netzwerkknoten (NB) über einen bevorzugten Pfad (PP) erreichbar ist,
- und eine zweite Schnittstelle (I2), über welche der besagte zweite Netzwerkknoten (NB) über einen Backup-Pfad (BP) erreichbar ist,
**dadurch gekennzeichnet, dass** der besagte erste Netzwerkknoten (NA) eine Gesamtmetrik (OM1-BP) des besagten Backup-Pfads erhöht, indem er den besagten anderen Netzwerkknoten (NB, NX) mindestens einen Pseudo-Netzwerkknoten (PN) als einen zwischen dem besagten ersten Netzwerkknoten (NA) und dem besagten zweiten Netzwerkknoten (NB) angeordneten Netzwerkknoten anzeigt.

2. Verfahren nach Anspruch 1,
wobei der besagte erste Netzwerkknoten (NA) den besagten Pseudo-Netzwerkknoten (PN) anzeigt, indem er den besagten anderen Netzwerkknoten (NB, NX) mindestens eine Verbindungsstatusnachricht (PDU-PN) sendet, welche enthält:
- Eine Pseudo-Netzwerkknotenadresse (ID-PN) als Netzwerkknotenadresse,
- eine Nachbarschaftsliste (AL-PN), welche den besagten ersten Netzwerkknoten (NA) und einen dritten Netzwerkknoten (NB), der über die besagte zweite Schnittstelle (I2) erreichbar ist, angibt, und
- eine mit einer Verbindungsstrecke (L3'), die den besagten Pseudo-Netzwerkknoten (PN) und den besagten dritten Netzwerkknoten (NB) verbindet, assoziierte Metrik (M1-PN).

3. Verfahren nach Anspruch 2,
wobei die besagte Verbindungsstatusnachricht (PDU-PN), welche den besagten Pseudo-Netzwerkknoten (PN) anzeigt, eine mit einer zweiten Verbindungsstrecke (VL3), die den besagten Pseudo-Netzwerkknoten (PN) und den besagten ersten Netzwerkknoten (NA) verbindet, assoziierte zweite Metrik (M2-PN) enthält.

4. Verfahren nach Anspruch 3,
wobei sich der besagte erste Netzwerkknoten (NA) bei den besagten anderen Netzwerkknoten (NB, NX) anzeigt, indem er den besagten anderen Netzwerkknoten (NB, NX) mindestens eine Verbindungsstatusnachricht (PDU-NA') sendet, welche enthält:
- eine Nachbarschaftsliste (AL_NA'), welche den besagten Pseudo-Netzwerkknoten (PN) anstelle des besagten dritten Knotens (NB) angibt, und
- eine mit der besagten zweiten Verbindungsstrecke (VL3), die den besagten ersten Netzwerkknoten (NA) und den besagten Pseudo-Netzwerkknoten (PN) verbindet, assoziierte dritte Metrik (M2-NA').

5. Verfahren nach den Ansprüchen 1 bis 4,
wobei der besagte erste Netzwerkknoten (NA) die besagte Pseudo-Netzwerkknotenadresse setzt, indem er k erste Bytes der besagten Pseudo-Netzwerkknotenadresse auf k erste Bytes der besagten Netzwerkknotenadresse (ID-NA) des besagten ersten Netzwerkknotens (NA) und j letzte Bytes der besagten Pseudo-Netzwerkknotenadresse auf einen Wert, der sich von Null unterscheidet, setzt.

6. Verfahren nach den Ansprüchen 1 bis 5,
wobei der besagte erste Netzwerkknoten (NA) Handshake-Nachrichten mit dem besagten dritten Knoten (NB) austauscht, wobei die besagten Handeshake-Nachrichten eine entsprechende Pseudo-Netzwerkknotenkennung enthält, welche einen entsprechenden mit dem entsprechenden Netzwerkknoten, der die Handshake-Nachricht sendet, assoziierten Pseudo-Netzwerkknoten angibt.

7. Verfahren nach den Ansprüchen 1 bis 6,
wobei die besagten Netzwerkknoten ausgehend von den empfangenen Verbindungsstatusnachrichten Routing-Tabellen für das Weiterleiten von Datenpaketen erzeugen.

8. Netzwerkknoten (NN) für den Austausch von Datenpaketen in einem paketvermittelten Netzwerk, wobei der besagte Netzwerkknoten (NN) dazu ausgelegt ist, sich bei anderen Netzwerkknoten (NA, NB, NX) anzuzeigen, indem er mindestens eine Verbindungsstatusnachricht erzeugt und an die besagten anderen Netzwerkknoten (NA, NB, NX) sendet, welche enthält:
- eine Netzwerkknotenadresse des entsprechenden Knotens (NA),
- eine Nachbarschaftsliste, welche mit dem besagten Netzwerkknoten benachbarte Netzwerkknoten angibt, und
- für jeden in der besagten Nachbarschaftstiste angegebenen benachbarten Netzwerkknoten, eine Metrik einer entsprechenden Verbindungsstrecke zwischen dem besagten Netzwerkknoten und dem besagten entsprechenden benachbarten Netzwerkknoten,
wobei der besagte Netzwerkknoten (NA) aufweist:
- eine erste Schnittstelle (IF1), welche dazu ausgelegt ist, Datenpakete mit einem zweiten Netzwerkknoten über einen bevorzugten Pfad auszutauschen, und
- eine zweite Schnittstelle (IF2), welche dazu ausgelegt ist, Datenpakete mit dem besagten zweiten Knoten über einen Backup-Pfad (BP) auszutauschen,
**dadurch gekennzeichnet, dass** der besagte Netzwerkknoten (NN) Steuermittel umfasst, die dazu ausgelegt sind, eine Gesamtmetrik des besagten Backup-Pfads zu erhöhen, indem sie den besagten anderen Knoten mindestens einen Pseudo-Netzwerkknoten anzeigen,
und wobei die besagten Steuermittel dazu ausgelegt sind, den besagten Pseudo-Netzwerkknoten als einen zwischen dem besagten ersten Netzwerkknoten (NA) und dem besagten zweiten Netzwerkknoten (NB) angeordneten Netzwerkknoten anzuzeigen.

9. Netzwerkknoten nach Anspruch 8,
wobei der besagte Netzwerkknoten dazu ausgelegt ist, mindestens eine Verbindungsstatusnachricht zu erzeugen und an die besagten anderen Knoten zu senden, welche enthält:
- eine Pseudo-Netzwerkknotenadresse als Netzwerkknotenadresse,
- eine Nachbarschaftsliste, welche den besagten Netzwerkknoten und einen anderen Netzwerkknoten, der über die besagte zweite Schnittstelle (IF2) erreichbar ist, angibt,
- eine mit einer Verbindungsstrecke zwischen dem besagten Pseudo-Netzwerkknoten und dem besagten Netzwerkknoten (NN) assoziierte Metrik.

## Revendications

1. Procédé d'échange d'informations de routage entre des noeuds de réseau dans un réseau à commutation de paquets,
dans lequel lesdits noeuds de réseau (NA, NB, NX) s'annoncent eux-mêmes à d'autres noeuds de réseau (NA, NB, NX), en envoyant auxdits autres noeuds de réseau (NA, NB, NX) des messages d'état de liaison (PDU-NA, PDU-NB, PDU-NX) contenant
- une adresse du noeud de réseau (ID-NA) du noeud respectif (NA),
- une liste d'adjacence (AL-NA) indiquant des noeuds de réseau (NX, NB) adjacents audit noeud de réseau respectif (NA), et
- pour chaque noeud de réseau adjacent (NX, NB) indiqué dans ladite liste d'adjacence (AL-NA) une mesure (M1-NA) associée à une liaison respective (L1) reliant ledit noeud de réseau respectif (NA) et ledit noeud de réseau adjacent respectif (NX), dans lequel un premier noeud de réseau (NA) présente
- une première interface (I1), par l'intermédiaire de laquelle un deuxième noeud de réseau (NB) est accessible par l'intermédiaire d'un chemin préféré (PP),
- et une deuxième interface (12), par l'intermédiaire de laquelle ledit deuxième noeud de réseau (NB) est accessible par l'intermédiaire d'un chemin de sauvegarde (BP), **caractérisé en ce que** ledit premier noeud de réseau (NA) augmente une mesure globale (OM1-BP) dudit chemin de sauvegarde (BP), en annonçant auxdits autres noeuds de réseau (NB, NX) au moins un pseudo noeud de réseau (PN) en tant que noeud de réseau situé entre ledit premier noeud de réseau (NA) et ledit deuxième noeud de réseau (NB).

2. Procédé selon la revendication 1,
dans lequel ledit premier noeud de réseau (NA) annonce ledit pseudo noeud de réseau (PN), en envoyant auxdits autres noeuds de réseau (NB, NX) au moins un message d'état de liaison (PDU-PN) contenant
- une adresse du pseudo noeud de réseau (ID-PN) en tant qu'adresse du noeud de réseau,
- une liste d'adjacence (AL-PN) indiquant ledit premier noeud de réseau (NA) et un troisième noeud de réseau (NB) qui est accessible par l'intermédiaire de ladite deuxième interface (12) et,
- une mesure (M1-PN) associée à une liaison (L3') reliant ledit pseudo noeud de réseau (PN) et ledit troisième noeud de réseau (NB).

3. Procédé selon la revendication 2,
dans lequel ledit message d'état de liaison (PDU-PN) annonçant ledit pseudo noeud de réseau (PN) contient une deuxième mesure (M2-PN) associée à une deuxième liaison (VL3) reliant ledit pseudo noeud de réseau (PN) et ledit premier noeud de réseau (NA).

4. Procédé selon la revendication 3,
dans lequel ledit premier noeud de réseau (NA) s'annonce lui-même auxdits autres noeuds de réseau (NB, NX), en envoyant auxdits autres noeuds de réseau (NB, NX) au moins un message d'état de liaison (PDU-NA') contenant
- une liste d'adjacence (AL_NA') indiquant ledit pseudo noeud de réseau (PN) au lieu dudit troisième noeud (NB), et
- une troisième mesure (M2-NA') associée à ladite deuxième liaison (VL3) reliant ledit premier noeud de réseau (NA) et ledit pseudo noeud de réseau (PN).

5. Procédé selon les revendications 1 à 4,
dans lequel ledit premier noeud de réseau (NA) règle ladite adresse du pseudo noeud de réseau, en réglant k premiers octets de ladite adresse du pseudo noeud de réseau sur k premiers octets de ladite adresse du noeud de réseau (ID-NA) dudit premier noeud de réseau (NA), et en réglant i derniers octets de ladite adresse du pseudo noeud de réseau sur une valeur différente de zéro.

6. Procédé selon les revendications 1 à 5,
dans lequel ledit premier noeud de réseau (NA) échange avec ledit troisième noeud (NB) des messages d'établissement de liaison, dans lequel lesdits messages d'établissement de liaison contiennent un identifiant de pseudo noeud de réseau respectif indiquant un pseudo noeud de réseau respectif associé au noeud de réseau respectif envoyant le message d'établissement de liaison.

7. Procédé selon les revendications 1 à 6,
dans lequel lesdits noeuds de réseau génèrent à partir des messages d'état de liaison reçus des tables de routage pour transférer des paquets de données.

8. Noeud de réseau (NN) pour échanger des paquets de données dans un réseau à commutation de paquets, dans lequel ledit noeud de réseau (NN) est adapté pour s'annoncer lui-même aux autres noeuds de réseau, en générant et en envoyant auxdits autres noeuds de réseau au moins un message d'état de liaison contenant
- une adresse du noeud de réseau dudit noeud de réseau,
- une liste d'adjacence indiquant des noeuds de réseau adjacents audit noeud de réseau, et
- pour chaque noeud de réseau adjacent indiqué dans ladite liste d'adjacence, une mesure d'une liaison respective entre ledit noeud de réseau et ledit noeud adjacent respectif,
dans lequel ledit noeud de réseau comprend
- une première interface (IF1), qui est adaptée pour échanger des paquets de données avec un deuxième noeud de réseau par l'intermédiaire d'un chemin préféré, et
- une deuxième interface (IF2), qui est adaptée pour échanger des paquets de données avec ledit deuxième noeud par l'intermédiaire d'un chemin de sauvegarde, **caractérisé en ce que** ledit noeud de réseau (NN) contient des moyens de commande qui sont adaptés pour augmenter une mesure globale dudit chemin de sauvegarde, en annonçant auxdits autres noeuds au moins un pseudo noeud de réseau,
et dans lequel lesdits moyens de commande sont adaptés pour annoncer ledit pseudo noeud de réseau en tant que noeud de réseau situé entre ledit premier noeud de réseau (NA) et ledit deuxième noeud de réseau (NB).

9. Noeud de réseau selon la revendication 8,
dans lequel ledit noeud de réseau est adapté pour générer et envoyer auxdits autres noeuds au moins un message d'état de liaison contenant
- une adresse du pseudo noeud de réseau en tant qu'adresse du noeud de réseau,
- une liste d'adjacence indiquant ledit noeud de réseau et un autre noeud de réseau qui est accessible par l'intermédiaire de ladite deuxième interface (IF2),
- une mesure associée à une liaison entre ledit pseudo noeud de réseau et ledit noeud de réseau (NN).
